# EUROPEAN PATENT SPECIFICATION

(11) **EP 2 549 484 B1**
(45) Date of publication and mention of the grant of the patent: **10.09.2014**
(21) Application number: 12175231.5
(22) Date of filing: 06.07.2012
(51) Int. Cl.: G21C 15/18

(54) **Nuclear power plant**
Kernkraftwerk
Centrale nucléaire

(30) Priority: 20.07.2011 JP 2011158693
(43) Date of publication of application: 23.01.2013
(73) Proprietor: Hitachi-GE Nuclear Energy, Ltd., Hitachi-shi Ibaraki 317-0073 (JP)
(72) Inventor: Kito, Kazuaki, Tokyo 100-8220 (JP); Matsuura, Masayoshi, Ibaraki 317-0073 (JP); Ando, Koji, Ibaraki 317-0073 (JP)
(74) Representative: Beetz & Partner

(56) References cited:
- JP-A- 4 076 494
- JP-A- 54 089 190
- JP-A- 2007 240 284
- US-A- 5 169 595

## Description

### BACKGROUND OF THE INVENTION

The present invention relates to a nuclear power plant and, in particular, to a nuclear power plant suitable for a boiling water reactor nuclear power plant provided with a pressure suppression pool cooling system.

A nuclear power plant, for example, a boiling water reactor nuclear power plant (hereinafter, referred to as a BWR plant) requires that decay heat in a core be removed even after shutdown of the BWR plant. Normally, the decay heat is removed by drawing part of water from a reactor pressure vessel or a pressure suppression pool provided in a lower portion of a primary containment vessel, and then, returning the water to the reactor pressure vessel or the pressure suppression pool after the water was cooled by a heat exchanger for exchanging heat with sea water.

Such cooling system uses an electric power driven pump to draw the water from the reactor pressure vessel or the pressure suppression pool and to pump up the sea water for cooling, thus requires an electrical power source for operation. When an abnormal event occurs such that power transmission to the BWR plant from the outside is stopped, an emergency generator provided to the reactor is activated to operate the cooling system.

On the other hand, as a system for removing the decay heat without an electrical power source when power transmission to the BWR plant from the outside is stopped, for example, an isolation condenser is proposed in JP 1987 182697 A.

The isolation condenser has a heat exchanger pipe installed in pool water of an isolation condenser cooling pool, and is a reactor cooling system in which steam is drawn from the reactor pressure vessel to be passed through the heat exchanger pipe and thereby is condensed into condensed water, and is then returned the condensed water to the reactor pressure vessel. This system runs by the weight of the condensed water (water head) as driving power, so that it can operate without an electric power source.

Usually, when equipment for removing the decay heat such as the isolation condenser is not provided or when the startup of the decay heat removing equipment fails, steam generated in the reactor pressure vessel by the decay heat is introduced to the pressure suppression pool to release the decay heat generated in the reactor pressure vessel to the outside of the reactor pressure vessel. At this time, cooling water in the reactor pressure vessel is decreased for the amount of the water discharged to the pressure suppression pool, thus the cooling water must be supplied into the reactor pressure vessel.

As a system for supplying the cooling water into the reactor pressure vessel without an electric power source, a core isolation cooling system is available which supplies the cooling water with a pump using steam drawn from the reactor pressure vessel as driving power.

This core isolation cooling system uses the energy of steam generated in the reactor pressure vessel to drive the pump for supplying the cooling water. Although electric power is needed to control the pump, a battery can be used when no power supply is available from the external power source or the emergency generator.

Since the capacity of the battery for controlling the core isolation cooling system is finite, a large-capacity battery needs to be installed for prolonged operation. In order to solve this problem, JP 1997 113669 A and JP 2001 349975 A each propose a system combining the core isolation cooling system and a power generating system. Other systems are illustrated e.g. in JPH0476494, US5169595 or JPS5489190.

### SUMMARY OF THE INVENTION

The isolation condenser disclosed in JP 1987 182697 A can remove the decay heat generated in the core of the reactor pressure vessel without an electric power source, but duration of the operation is limited by the water quantity in the cooling pool. Since the decay heat is collected to the cooling pool, the cooling water in the cooling pool is gradually heated, and when the temperature of the cooling water in the cooling pool reaches the boiling point, the cooling water in the cooling pool starts evaporating. In other words, when the cooling water in the cooling pool is gone by evaporation, the operation of the isolation condenser is practically ended.

The cooling pool for the isolation condenser needs to be installed above the reactor pressure vessel because of its operating principle. Thus, when a large-capacity cooling pool needs to be installed for prolonged operation, the cost of construction may increase due to maintaining quake resistance.

In order to avoid this, a cooling water supply system for the cooling pool may be provided while the capacity of the cooling pool is kept small. However in this case, a pump having at least a certain level of pump head needs to be installed because the cooling pool is located high.

On the other hand, the core isolation cooling system can supply the cooling water into the reactor pressure vessel without any power sources except for a battery. As disclosed in JP 1997 113669 A and JP 2001 349975 A, when the core isolation cooling system and a power generating system are combined, the battery for control can be a small-capacity battery just for stabilizing voltage.

The core isolation cooling system, however, has no function of removing the decay heat generated in the core, so that the decay heat is eventually released to the pressure suppression pool in the primary containment vessel. Thus, in order to run the core isolation cooling system for a prolonged period of time, an apparatus for reducing temperature increase in the pressure suppression pool is needed (in specification of this application, reducing temperature increase is referred to as cooling).

JP 2007 240284 A discloses a nuclear power plant comprising a primary containment vessel, a reactor pressure vessel installed in the primary containment vessel, and a pressure suppression pool in which first cooling water is filled for reducing pressure increase in the_primary containment vessel, installed in a lower portion of the primary containment vessel, and a passive pressure suppression pool cooling system.

An object of the present invention is to provide a nuclear power plant having a passive pressure suppression pool cooling system that can operate passively without electric power supply from outside and an emergency generator and cool a pressure suppression pool.

This object is accomplished with a nuclear power plant having the features of claim 1.

Dependent claims are directed on preferred features of the invention.

According to the present invention, cooling water in the pressure suppression pool provided in the primary containment vessel can be cooled by a passive pressure suppression pool cooling system which operates passively without electric power supply from the outside and an emergency generator.

### BRIEF DESCRIPTION OF THE DRAWINGS

FIG. 1 is a structural diagram showing a conventional nuclear power plant having an isolation condenser.
FIG. 2 is a structural diagram showing a conventional nuclear power plant having a core isolation cooling system.
FIG. 3 is a structural diagram showing a nuclear power plant having a passive pressure suppression pool cooling system, according to an embodiment of the present invention.

### DETAILED DESCRIPTION OF THE PREFERRED EMBODIMENTS

The inventors have studied a way to cool the pressure suppression pool provided in the primary containment vessel by a cooling system which operates passively without electric power supply from the outside or a standby generator, and reached a conclusion that steam could be first drawn from the reactor pressure vessel, then condensed in a steam condenser disposed in cooling water in a cooling pool disposed outside the primary containment vessel, and then, released into a pressure suppression pool in a lower portion of the primary containment vessel.

This allows most of the decay heat generated in the reactor pressure vessel to be released outside the primary containment vessel so that the pressure suppression pool provided in the primary containment vessel can be cooled.

An embodiment of the present invention reflecting the above study result will be described below.

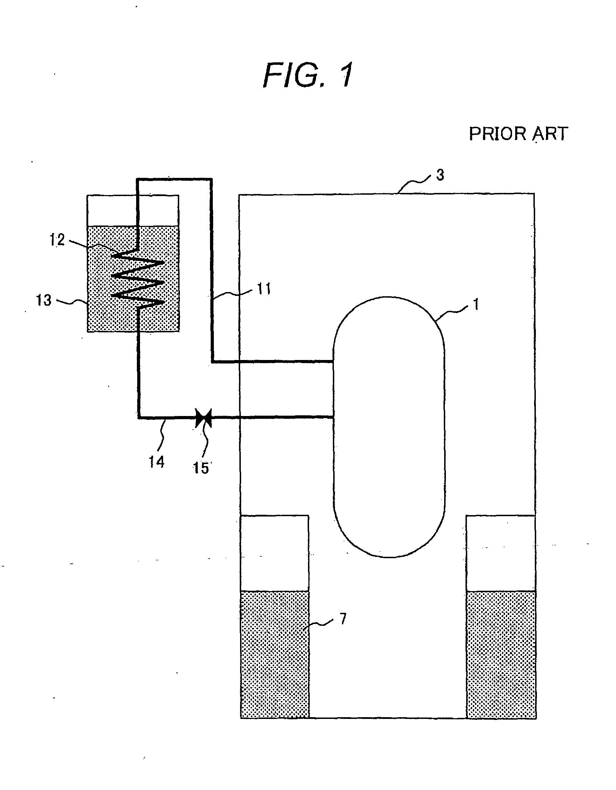

First of all, an example of the structure of a conventional nuclear power plant having an isolation condenser will be described with reference to FIG. 1.

As shown in FIG. 1, a conventional nuclear power plant (a conventional BWR plant) is provided with a primary containment vessel 3, a reactor pressure vessel 1 installed in the primary containment vessel 3, and a pressure suppression pool 7 for reducing pressure increase in the primary containment vessel 3, provided in the lower portion of the primary containment vessel 3.

A steam supply pipe 11 for drawing steam is connected to an upper portion (steam region) of the reactor pressure vessel 1. The steam supply pipe 11 penetrates a sidewall of the primary containment vessel 3 to take itself out of the primary containment vessel 3. The steam supply pipe 11 is connected to an isolation condenser 12 at the outside of the primary containment vessel 3. The isolation condenser 12 is disposed in an isolation condenser cooling pool 13.

Steam condensed in the isolation condenser 12 is passed through a condensed water discharge pipe 14 as the condensed water. The condensed water is eventually returned to the lower portion (water region) of the reactor pressure vessel 1. In addition, the condensed water discharge pipe 14 is provided with an isolation condenser starting valve 15, and the isolation condenser starting valve 15 which is closed during normal operation is opened to start up the isolation condenser.

In an actual BWR plant, isolation valves are provided to the steam supply pipe 11 and the condensed water discharge pipe 14 penetrating the primary containment vessel 3, at the front and the back of the portions penetrating the primary containment vessel 3, but they are not shown in the drawing of the present embodiment. In addition, the reactor isolation cooling system, the isolation condenser, and the passive pressure suppression pool cooling system in the present embodiment have a starting valve which is closed during normal operation but opened for starting up the system, and a check valve and/or a stop valve are provided to each pipe as necessary, but they are not shown in the drawings of the present embodiment.

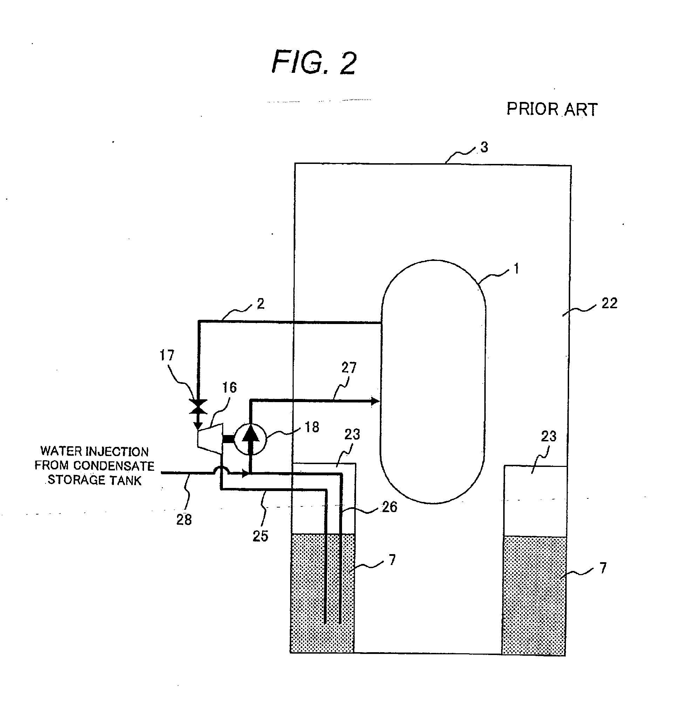

Another example of a structure of a core isolation cooling system in a conventional BWR plant will be described with reference to FIG. 2.

As shown in FIG. 2, a nuclear power plant (a conventional BWR plant) is provided with a primary containment vessel 3, a reactor pressure vessel 1 installed in a drywell 22 of the primary containment vessel 3, and a pressure suppression pool 7 for reducing pressure increase in the primary containment vessel 3, installed in the lower portion of the primary containment vessel 3.

A steam supply pipe 2 for drawing steam is connected to an upper portion (steam region) of the reactor pressure vessel 1, and the steam supply pipe 2 penetrates a sidewall of the primary containment vessel 3 to be connected to a turbine 16 for driving a water injection pump 18. The turbine 16 is coupled with the water injection pump 18. A starting valve 17 is installed to the steam supply pipe 2. The starting valve 17 is closed during normal operation, and opened when the core isolation cooling system is started up. Steam discharged from the turbine 16 is passed through a steam discharge pipe 6, and is eventually released to the pressure suppression pool 7 in the primary containment vessel 3 for condensation.

As a water injection system for the reactor pressure vessel 1, two systems are provided here, for example. One has a condensate storage tank (not shown) outside the primary containment vessel 3 as a water source, wherein cooling water is drawn from the condensate storage tank to be pressurized by the water injection pump 18 coupled with the turbine 16 for operation, and supplied into the reactor pressure vessel 1 through a water supply pipe 27. The other system draws cooling water from the pressure suppression pool 7 in the primary containment vessel 3 through a water supply pipe 26, then pressurizes the cooling water by the water injection pump 18 in the same manner, and supplied into the reactor pressure vessel 1 through the water supply pipe 27. Normally, the cooling water is supplied from the condensate storage tank to the reactor pressure vessel 1, and when the cooling water quantity in the condensate storage tank is decreased, the supply source is switched from the condensate storage tank to the pressure suppression pool 7.

In an actual BWR plant, isolation valves are installed to the steam supply pipe 2 and the water supply pipe 27 penetrating the primary containment vessel 3, at the front and the back of each portion penetrating the primary containment vessel 3, though they are not shown in FIG. 2. A check valve and/or a stop valve are installed to each pipe as necessary, though they are not shown in FIG. 2.

Normally, the cooling water in the reactor pressure vessel 1 is heated by the decay heat generated in the reactor pressure vessel 1, and steam is generated in the reactor pressure vessel 1. Part of the generated steam is used to operate the turbine 16 in the core isolation cooling system. Generally, the quantity of the steam used by the turbine 16 is less than the quantity of the steam generated by the decay heat, thus, most of the steam generated by the decay heat is released to the pressure suppression pool 7 through the safety relief valve (not shown) installed to the main steam pipe (not shown) connected to the reactor pressure vessel 1. When the core isolation cooling system is operated longer than assumed, the temperature of cooling water in the pressure suppression pool 7 is gradually increased, which may increase the pressure inside the primary containment vessel 3.

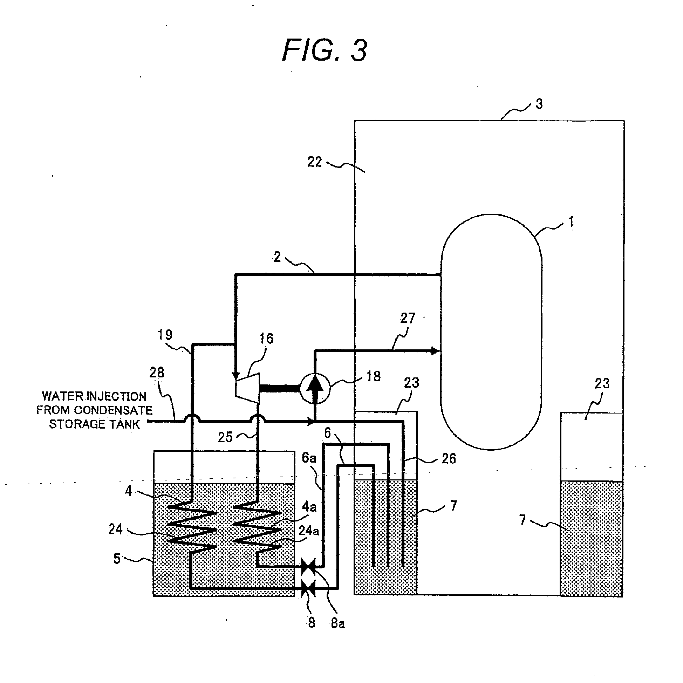

A nuclear power plant having a passive pressure suppression pool cooling system, according to an embodiment of the present invention, will be described by referring to FIG. 3. The nuclear power plant according to the present embodiment is a BWR plant.

The BWR plant of the embodiment has a steam condenser 4a connected to an outlet of the turbine 16. That is, as shown in FIG. 3, the steam discharge pipe 25 connected to the outlet of the turbine 16 is connected to the steam condenser 4a disposed in the steam condensing pool 5. The steam is condensed by the cooling water in the steam condensing pool 5 in the heat exchanger tube 24a of the steam condenser 4a. The condensed water generated by the condensation of the steam is introduced in the pressure suppression pool 7 through a condensed water discharge pipe 6a, and released to the cooling water in the pressure suppression pool 7. A fluid discharge pipe includes the steam discharge pipe 25 and the condensed water discharge pipe 6a, and the steam condenser 4a is installed to the fluid discharge pipe in the steam condensing pool 5.

A starting valve 8a is installed to the condensed water discharge pipe 6a, closed during normal operation, and opened to start up the passive pressure suppression pool cooling system.

Furthermore, according to the present embodiment, the cooling effect of the pressure suppression pool 7 is further improved because the steam discharged from the turbine 16 is condensed in the steam condenser 4a.

In addition, the condensed water discharge pipe 6 may be connected to the condensed water discharge pipe 6a at a downstream side of the starting valve 8a, an orifice and/or a flow control valve may be installed to the steam supply pipe 19 and/or condensed water discharge pipe 6.

In an actual BWR plant, isolation valves are installed to the steam supply pipe 2, the condensed water discharge pipes 6 and 6a, the water supply pipe 26 and the water supply pipe 27 penetrating the primary containment vessel 3, at the front and the back of the portions penetrating the primary containment vessel 3, and a check valve and/or a stop valve are installed to each pipe as necessary, but they are not shown in FIG. 3.

### [REFERENCE SIGNS LIST]

1 : reactor pressure vessel, 2, 19 : steam supply pipe, 3 : primary containment vessel, 4, 4a : steam condenser, 5 : steam condensing pool, 6, 6a : condensed water discharge pipe, 7 : pressure suppression pool, 8, 8a, 17 : starting valve, 16 : turbine, 18 : water injection pump, 22 : drywell, 23 : pressure suppression chamber, 225 : steam discharge pipe, 26, 27 : water supply pipe.

## Claims

1. A nuclear power plant comprising:
a primary containment vessel (3); a reactor pressure vessel (1) installed in the primary containment vessel (3); and a pressure suppression pool (7) in which first cooling water is filled for reducing pressure increase in the primary containment vessel (3), installed in a lower portion of the primary containment vessel (3); and a passive pressure suppression pool cooling system,
wherein the passive pressure suppression pool cooling system has a turbine (16); a first steam supply pipe (2) connecting the reactor pressure vessel (1) to the turbine (16); a fluid discharge pipe connected to the turbine (16) and having a first end portion disposed in the pressure suppression pool (7); a cooling water supply pipe connected to the reactor pressure vessel and having a second end portion disposed in the pressure suppression pool (7); a pump (18) coupled with the turbine (16) and installed to the cooling water supply pipe (27); a steam condensing pool (5) in which second cooling water is filled, disposed outside the primary containment vessel (3); a steam condenser (4) disposed in the steam condensing pool (5); a second steam supply pipe (19) connecting the first steam supply pipe (2) to the steam condenser (4); and a condensed water discharge pipe (6) connected to the steam condenser (4) and having a third end portion disposed in the pressure suppression pool (7), and
wherein another steam condenser (4a) is disposed in the steam condensing pool (5), and the other steam condenser (4a) is connected to the outlet of the turbine (16) via a steam discharge pipe (25) and the condensed water generated by the condensation of steam is introduced in the pressure suppression pool (7) through a condensed water discharge pipe (6a), and wherein
starting valves (8, 8a) are installed to the condensed water discharge pipes (6, 6a) arranged for bang closed during normal operation and opened to start up the passive pressure suppression pool cooling system.

2. The nuclear power plant according to claim 1,
wherein a valve is installed to the first steam supply pipe (2).

3. The nuclear power plant according to claim 1,
wherein at least one orifice that limits a flow rate to critical flow is installed either in the first steam supply pipe (2) or in the condensed water discharge pipe (6).

## Patentansprüche

1. Kernkraftwerk mit:
einem primären Sicherheitsbehälter (3), einem Reaktordruckbehälter (1), der in dem primären Sicherheitsbehälter (3) installiert ist, und einem Druckabbaubecken (7), in das erstes Kühlwasser gefüllt ist zur Reduzierung eines Druckanstiegs in dem primären Sicherheitsbehälter (3), das in einem unteren Bereich des primären Sicherheitsbehälters (3) installiert ist, und einem passiven Kühlsystem des Druckabbaubeckens,
wobei das passive Kühlsystem des Druckabbaubeckens aufweist:
eine Turbine (16), eine erste Dampfzufuhrleitung (2), die den Reaktordruckbehälter (1) mit der Turbine (16) verbindet, ein Fluidentleerungsrohr, das mit der Turbine (16) verbunden ist und das einen ersten Endbereich aufweist, der in dem Druckabbaubecken (7) angeordnet ist, ein Kühlwasserzufuhrrohr, das mit dem Reaktordruckbehälter verbunden ist und einen zweiten Endbereich aufweist, der in dem Druckabbaubecken (7) angeordnet ist, eine mit der Turbine (16) gekoppelte Pumpe (18), die am Kühlwasserzufuhrrohr (27) installiert ist, ein Dampfkondensationsbecken (5), in welches zweites Kühlwasser gefüllt ist, das außerhalb des primären Sicherheitsbehälters (3) angeordnet ist, einen Dampfkondensator (4), der in dem Dampfkondensationsbecken (5) angeordnet ist, eine zweite Dampfzufuhrleitung (19), die die erste Dampfzufuhrleitung (2) mit dem Dampfkondensator (4) verbindet, und eine Entleerungsleitung (6) für Kondenswasser, die mit dem Dampfkondensator (4) verbunden ist und einen dritten Endbereich aufweist, der in dem Druckabbaubecken (7) angeordnet ist, und
wobei ein weiterer Dampfkondensator (4a) in dem Dampfkondensationsbecken (5) angeordnet ist, der mit dem Ausgang der Turbine (16) über eine Dampfablassleitung (25) verbunden ist, und wobei das Kondenswasser, das durch die Kondensation des Dampfes erzeugt wird, in das Druckabbaubecken (7) über eine Kondenswasserentleerungsleitung (6a) geführt wird, und wobei Anfahrventile (8, 8a) in den Kondenswasserentleerungsleitungen (6, 6a) installiert sind, die angeordnet sind, um während des Normalbetriebs geschlossen zu sein, und die geöffnet sind, um das passive Kühlsystem des Druckabbaubeckens zu starten.

2. Kernkraftwerk nach Anspruch 1, wobei ein Ventil in der ersten Dampfzufuhrleitung (2) installiert ist.

3. Kernkraftwerk nach Anspruch 1, wobei mindestens eine Öffnung, die eine Flussrate auf einen kritischen Wert begrenzt, entweder in der ersten Dampfzufuhrleitung (2) oder in der Kondenswasserentleerungsleitung (6) installiert ist.

## Revendications

1. Centrale nucléaire comprenant :
une enveloppe (3) de confinement principale ; un caisson (1) de réacteur installé dans l'enveloppe (3) de confinement principale ; et une piscine (7) de suppression de pression dans laquelle une première eau de refroidissement est remplie pour limiter une augmentation de pression dans l'enveloppe (3) de confinement principale, installée dans une partie inférieure de l'enveloppe (3) de confinement principale ; et un système de refroidissement passif de piscine de suppression de pression,
dans laquelle le système de refroidissement passif de piscine de suppression de pression a une turbine (16) ; un premier tuyau (2) d'alimentation de vapeur connectant le caisson (1) de réacteur à la turbine (16) ; un tuyau de décharge de fluide connecté à la turbine (16) et ayant une première partie d'extrémité disposée dans la piscine (7) de suppression de pression ; un tuyau d'alimentation d'eau de refroidissement connecté au caisson de réacteur et ayant une deuxième partie d'extrémité disposée dans la piscine (7) de suppression de pression ; une pompe (18) couplée avec la turbine (16) et installée sur le tuyau (27) d'alimentation d'eau de refroidissement ; une piscine (5) de condensation de vapeur dans laquelle une deuxième eau de refroidissement est remplie, disposée à l'extérieur de l'enveloppe (3) de confinement principale ; un condenseur (4) de vapeur disposé dans la piscine (5) de condensation de vapeur ; un deuxième tuyau (19) d'alimentation de vapeur connectant le premier tuyau (2) d'alimentation de vapeur au condenseur (4) de vapeur ; et un tuyau (6) de décharge d'eau condensée connecté au condenseur (4) de vapeur et ayant une troisième partie d'extrémité disposée dans la piscine (7) de suppression de pression, et
dans laquelle un autre condenseur (4a) de vapeur est disposé dans la piscine (5) de condensation de vapeur, et l'autre condenseur (4a) de vapeur est connecté à la sortie de la turbine (16) par un tuyau (25) de décharge de vapeur et l'eau condensée générée par la condensation de vapeur est introduite dans la piscine (7) de suppression de pression par un tuyau (6a) de décharge d'eau condensée, et dans laquelle
des soupapes (8, 8a) de démarrage sont installées sur les tuyaux (6, 6a) de décharge d'eau condensée, agencées pour être fermées en fonctionnement normal et ouvertes pour démarrer le système de refroidissement passif de piscine de suppression de pression.

2. Centrale nucléaire selon la revendication 1,
dans laquelle une soupape est installée sur le premier tuyau (2) d'alimentation de vapeur.

3. Centrale nucléaire selon la revendication 1,
dans laquelle au moins un orifice qui limite un débit à un débit critique est installé soit dans le premier tuyau (2) d'alimentation de vapeur, soit dans le tuyau (6) de décharge d'eau condensée.
